# EUROPEAN PATENT SPECIFICATION

(11) **EP 3 952 181 B1**
(45) Date of publication and mention of the grant of the patent: **18.03.2026**
(21) Application number: 20777369.8
(22) Date of filing: 27.03.2020
(51) Int. Cl.: H04L 5/00

(54) **PROCESSING METHOD AND DEVICE**
VERARBEITUNGSVERFAHREN UND -VORRICHTUNG
PROCÉDÉ ET DISPOSITIF DE TRAITEMENT

(30) Priority: 28.03.2019 CN 201910244355
(43) Date of publication of application: 09.02.2022
(73) Proprietor: CHINA MOBILE COMMUNICATION CO., LTD. RESEARCH INSTITUTE, Beijing 100053 (CN); CHINA MOBILE COMMUNICATIONS GROUP CO., LTD., Beijing 100032 (CN)
(72) Inventor: LIU, Liang, Beijing 100032 (CN); XU, Xiaodong, Beijing 100032 (CN); WU, Dan, Beijing 100032 (CN); KE, Ting, Beijing 100032 (CN)
(74) Representative: GPI Brevets
(86) International application number: PCT/CN2020/081731
(87) International publication number: WO 2020/192764

(56) References cited:
- CN-A- 104 798 398
- US-A1- 2015 189 666
- 3GPP, TSGRAN: "Study on Remote Interference Management for NR (Release 16)", 3GPP TR 38.866 V16.1.0, 27 March 2019 (2019-03-27), XP051722956, DOI: 20200609161201X
- 3GPP, TSGRAN: "Study on Remote Interference Management for NR (Release 16)", 3GPP TR 38.866 V16.1.0, 27 March 2019 (2019-03-27), XP051722956, DOI: 20200609161206X
- HUAWEI: "gNB Grouping and Set ID Assignment", 3GPP TSG-RAN3 MEETING #102 R3-186493, 16 November 2018 (2018-11-16), XP051558280, DOI: 20200609161527Y
- ERICSSON: "PRACH Improvements for Network Robustness", 3GPP TSG-RAN WG1 MEETING #95 R1-1813172, 16 November 2018 (2018-11-16), XP051555165, DOI: 20200609161646Y
- QUALCOMM INCORPORATED: "PRACH Improvements for Network Robustness", 3GPP TSG-RAN WG3 #102 R3-186462, 16 November 2018 (2018-11-16), XP051558250, DOI: 20200609161807Y

## Description

### TECHNICAL FIELD

The present disclosure relates to the field of wireless communications system, in particular to a processing method and a communication device.

### BACKGROUND

In a Time Division Duplexing (TDD) network, there is a unique interference characteristic, i.e., atmospheric ducting interference. As a typical remote base station interference, the atmospheric ducting interference will seriously affect the performance of the TDD network. In addition, a huge number of base stations, e.g., all base stations in a city, are affected by the atmospheric ducting interference for a long time period, e.g., several weeks or even several months.

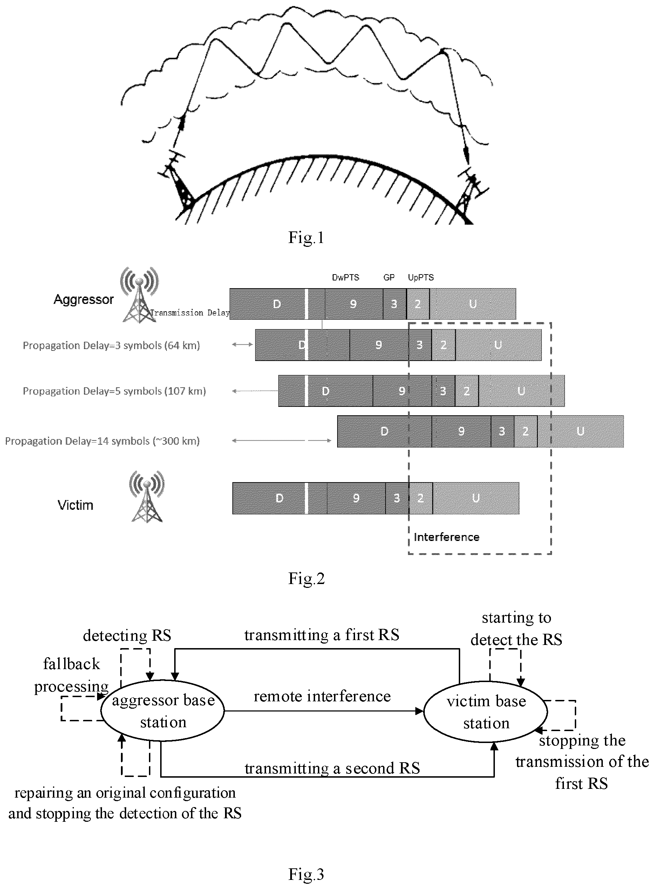

As shown in Figs.1 and 2, the remote base station interference mainly has the following characteristics: 1) a downlink signal from a TDD remote base station is propagated over a very large distance due to atmospheric duct, and when a transmission time length of the downlink signal exceeds a TDD uplink/downlink guard period, uplink reception of a local base station is interfered with; 2) interference characteristics are as follows: 2.1) interference distance: 150 kilometers (km) (inland), or 280km to 320km (coastal); 2.2) interference signal intensity: -130~-96 dBm/PRB; 2.3) interference period: early in the morning with a peak value at six or seven o'clock (inland), or all day (coastal).

In a Fourth-Generation (4G) era, the TDD remote base station interference is mainly prevented through a personalized scheme provided by each operator. In a Fifth-Generation (5G) era, a unified TDD network is used globally, so there is an urgent need to prevent the remote interference.

3GPP, TSGRAN ("Study on Remote Interference Management for NR (Release 16)", 3GPP TR 38.866 V16.1.0, 27 March 2019) captures the studies, agreements and recommendations in RAN3 for mechanisms on coordination among gNBs for RIM frameworks. HUAWEI ("gNB Grouping and Set ID Assignment", 3GPP TSG-RAN3 Meeting #102 R3-186493, 16 November 2018) discusses the gNB grouping problem and the related OAM configuration issues.

### SUMMARY

An object of the present disclosure is to provide a processing method and communication device, so as to perform remote interference management. The present invention is set out in the appended set of claims.

The present disclosure has the following beneficial effect.

According to the embodiments of the present disclosure, it is able to manage the remote base station interference under CU-DU architecture.

### BRIEF DESCRIPTION OF THE DRAWINGS

Fig.1 is a schematic view showing a remote base station interference caused by atmospheric duct;
Fig.2 is another schematic view showing the remote base station interference caused by the atmospheric duct;
Fig.3 is a flow chart of a processing method;
Fig.4 is another flow chart of the processing method;
Fig.5 is a schematic view showing DU-CU architecture;
Fig.6 is a first flow chart of a processing method according to some embodiments of the present disclosure;
Fig.7 is a second flow chart of the processing method according to some embodiments of the present disclosure;
Fig.8 is a third flow chart of the processing method according to some embodiments of the present disclosure;
Fig.9 is a fourth flow chart of the processing method according to some embodiments of the present disclosure;
Fig.10 is a fifth flow chart of the processing method according to some embodiments of the present disclosure;
Fig.11 is a sixth flow chart of the processing method according to some embodiments of the present disclosure;
Fig.12 is a seventh flow chart of the processing method according to some embodiments of the present disclosure;
Fig.13 is a schematic view showing a structure of a first device according to some embodiments of the present disclosure;
Fig.14 is a schematic view showing a structure of a victim base station according to some embodiments of the present disclosure;
Fig.15 is a schematic view showing a structure of an aggressor base station according to some embodiments of the present disclosure;
Fig.16 is another schematic view showing the structure of the victim base station according to some embodiments of the present disclosure; and
Fig.17 is another schematic view showing the structure of the aggressor base station according to some embodiments of the present disclosure.

### DETAILED DESCRIPTION

In order to make the objects, the technical solutions and the advantages of the present disclosure more apparent, the present disclosure will be described hereinafter in a clear and complete manner in conjunction with the drawings and embodiments.

Such words as "first" and "second" involved in the specification and the appended claims are merely used to differentiate different objects rather than to represent any specific order. It should be appreciated that, the data used in this way may be replaced with each other, so as to implement the embodiments in an order other than that shown in the drawings or described in the specification.

The technology described in the context shall not be limited to a 5G system and any subsequently evolved communications system.

The technology described in the context shall not be limited to a Long Term Evolution (LTE)/LTE-Advanced (LTE-A) system, and it is also applied to various wireless communications systems, e.g., Code Division Multiple Access (CDMA), Time Division Multiple Access (TDMA), Frequency Division Multiple Access (FDMA), Orthogonal Frequency Division Multiple Access (OFDMA), Single-Carrier Frequency-Division Multiple Access (SC-FDMA), or any other system.

The terms "system" and "network" may be replaced with each other. The CDMA system may be used to implement such radio technologies as CDMA2000 and Universal Terrestrial Radio Access (UTRA). The UTRA may include Wideband Code Division Multiple Access (WCDMA) and the other CDMA variants. The TDMA system may be used to implement such a radio technology as Global System for Mobile Communication (GSM). The OFDMA system may be used to implement such radio technologies as Ultra Mobile Broadband (UMB), Evolved-UTRA (E-UTRA), IEEE 802.11 (Wireless Fidelity (Wi-Fi)), IEEE 802.16 (WiMAX), IEEE 802.20, and Flash-OFDM. The UTRA and the E-UTRA are parts of a Universal Mobile Telecommunications System (UMTS). The LTE and a more advanced LTE (e.g., LTE-A) are new UMTS versions using the E-UTRA. The UTRA, E-UTRA, UMTS, LTE, LTE-A and GSM have been described in documents from the 3^{rd} Generation Partnership Project (3GPP). The technology described in the context may be applied to the above-mentioned systems and radio technologies, or applied to the other systems and radio technologies.

Fig.3 is a flow chart of a processing method which describes an RIM air interface scheme. As shown in Fig.3, the processing method includes the following steps.

Step 301: transmitting a first RS to an aggressor base station when a victim base station detects a remote interference.

Step 302: detecting, by the aggressor base station, whether the first RS is received, where the first RS is used to indicate that the victim base station is subjected to the remote interference.

Step 303: performing, by the aggressor base station, interference fallback processing using a remote base station interference function mitigation plan when the aggressor base station receives the first RS.

Step 304: repairing, by the aggressor base station, an original configuration, and stopping the detection of the RS.

Step 305: transmitting, by the aggressor base station, a second RS to the victim base station.

Step 306: starting, by the victim base station, to detect the second RS.

Step 307: stopping, by the victim base station, the transmission of the first RS.

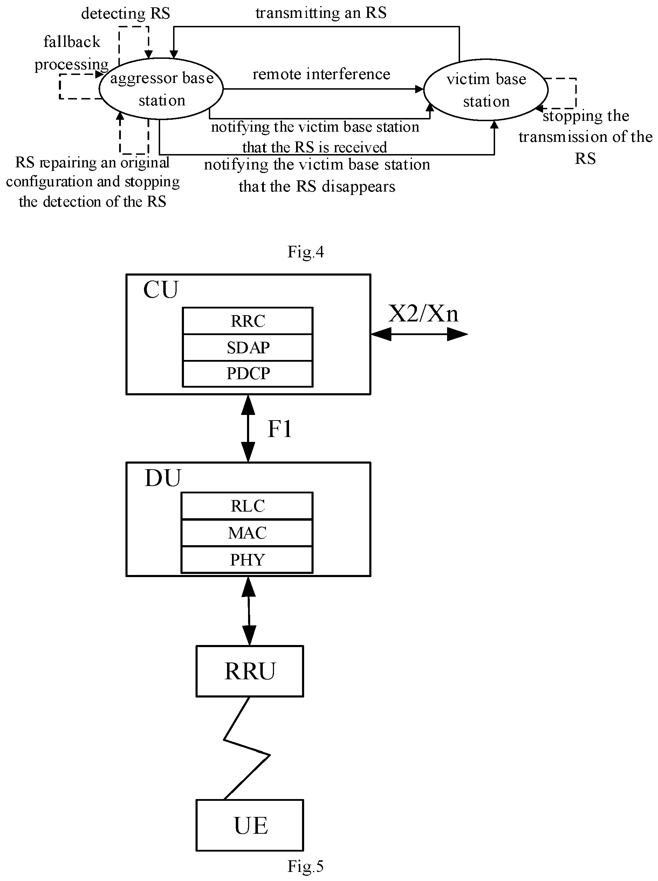

Fig.4 is another flow chart of the processing method which describes an RIM backhaul scheme. As shown in Fig.4, the processing method includes the following steps.

Step 401: when the victim base station detects the remote interference, transmitting, by the victim base station, an RS to the aggressor base station, where the RS is used to indicate that the victim base station is subjected to the remote interference.

Step 402: detecting, by the aggressor base station, whether the RS is received.

Step 403: notifying, by the aggressor base station, the victim base station that the RS is received via a backhaul network when the aggressor base station receives the RS.

Step 404: performing, by the aggressor base station, interference fallback processing using the remote base station interference function mitigation plan.

Step 405: repairing, by the aggressor base station, the original configuration, and stopping the detection of the RS.

Step 406: stopping, by the victim base station, the transmission of the RS.

Step 407: notifying, by the aggressor base station, the victim base station that the RS disappears.

Fig.5 is a schematic view of CU-DU architecture. In the CU-DU architecture, a 5G base station (gNB) is further divided into a CU and a DU, and the CU is capable of managing one or more DUs, i.e., the CU is equivalent to a centralized management unit for a plurality of DUs. Under the CU-DU architecture, the CU and the DUs need to coordinate to achieve an interference management function. Taking the victim base station as an example, the DU takes charge of detecting the remote base station interference. The CU is an endpoint of an X2/Xn/NG interface, and through the CU, it is able to manage a set Identity (ID), detect the interference and transmit the RIM-RS in a unified and coordinated manner.

In the processing methods in Figs.3 and 4, merely integrated gNB architecture is taken into consideration, without taking an RIM process in a scenario where the gNB is further divided into a gNB-CU and a gNB-DU into consideration. The CU-DU architecture differs from the integrated gNB architecture in terms of information exchange between the CU and the DU, parameter configuration and interference management, and the RIM information exchange and configuration under the CU-DU architecture remain to be studied.

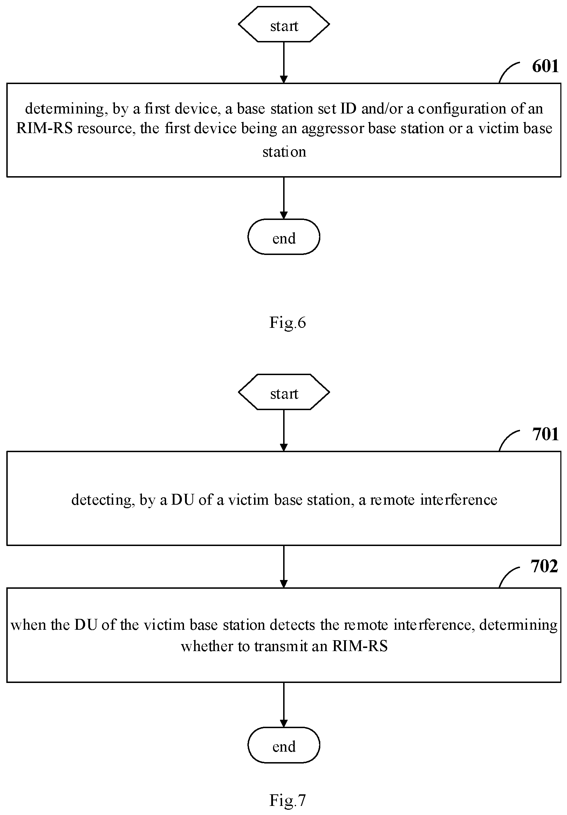

In order to perform the RIM under the CU-DU architecture, as shown in Fig.6, the present disclosure provides in some embodiments a processing method which describes a process of determining a base station set ID and a configuration of an RIM-RS resource under the CU-DU architecture. This method is executed by a first device serving as an aggressor base station and/or a victim base station. The first device is a 5G base station, or a network device in any other communications system. The processing method includes Step 601 of determining, by a first device, a base station set ID and/or a configuration of an RIM-RS resource. The first device is an aggressor base station or a victim base station.

In some embodiments of the present disclosure, the configuration of the RIM-RS resource is associated with the base station set ID.

In some embodiments of the present disclosure, one or more base stations form a set, and each set corresponds to one base station set ID. The base station set ID is used to differentiate identification information about different sets, and the base station set ID is a set identity (set ID). It should be appreciated that, one or more DUs of a same base station, or DUs of different base stations, form a set.

In some embodiments of the present disclosure, the configuration of the RIM-RS resource is used to indicate a configuration of a resource desired for transmitting an RIM-RS, e.g., a configuration of a time-domain resource and/or a frequency-domain resource desired for transmitting the RIM-RS. It should be appreciated that, types of the configuration of the RIM-RS resource will not be particularly defined herein.

The base station set ID and/or the configuration of the RIM-RS resource are determined in the following three modes.

### First mode

1) The base station set ID and/or the configuration of the RIM-RS resource are preset by a DU of the first device.
2) The DU of the first device receives the base station set ID and/or the configuration of the RIM-RS resource from the other device, and the other device is an Operation Administration and Maintenance (OAM) entity.

### Second mode

1) The base station set ID and/or the configuration of the RIM-RS resource are preset by a CU of the first device.
2) The CU of the first device receives the base station set ID and/or the configuration of the RIM-RS resource from the other device, and transmits the base station set ID and/or the configuration of the RIM-RS resource to one or more DUs connected to the CU.

A same base station set ID and a same RIM-RS, or different base station set IDs and different RIM-RSs, are configured for different DUs connected to the CU of the first device.

### Third Mode

When the remote base station interference occurs, the CU of the first device determines the base station set ID and/or the configuration of the RIM-RS resource in accordance with information about the remote base station interference.

Further, when the remote base station interference occurs, the DU of the first device transmits the information about the detected remote base station interference to the CU of the first device. The determining, by the CU of the first device, the base station set ID and/or the configuration of the RIM-RS resource in accordance with information about the remote base station interference specifically includes: when the remote base station interference occurs, receiving, by the CU of the first device, the information about the remote base station interference from the DU of the first device; enabling, by the CU of the first device, one or more DUs to form a set in accordance with the information about the remote base station interference; and transmitting, by the CU of the first device, the base station set ID and/or the configuration of the RIM-RS resource corresponding to the set to the one or more DUs connected to the CU.

According to the processing method in the embodiments of the present disclosure, it is able for the aggressor base station or the victim base station to determine the base station set ID and/or the configuration of the RIM-RS resource under the CU-DU architecture, thereby to manage the remote base station interference under the CU-DU architecture.

As shown in Fig.7, the present disclosure provides in some embodiments a processing method which describes a process of transmitting an RIM-RS under CU-DU architecture when the remote base station interference is caused due to a remote base station effect. This method is executed by a DU of a victim base station (also called as a first base station). The processing method includes: Step 701 of detecting, by a DU of the victim base station, a remote interference; and Step 702 of, when the DU of the victim base station detects the remote interference, determining whether to transmit an RIM-RS.

When the DU of the victim base station detects the remote interference, whether each DU transmits the RIM-RS will be described hereinafter in the following modes.

### First mode

When the DU of the victim base station detects the remote interference, the DU of the victim base station determines whether to transmit the RIM-RS. It should be appreciated that, when a plurality of DUs connected to a CU of the victim base station detect the remote interference, each DU independently determines whether to transmit the RIM-RS, without any necessity to negotiate with the CU and the other DUs of the victim base station.

### Second mode

When the DU of the victim base station detects the remote interference, the CU of the victim base station determines whether to transmit the RIM-RS. Step 702 specifically includes: when the DU of the victim base station detects the remote interference, transmitting, by the DU of the victim base station, information indicating that the DU is subjected to the remote interference to the CU of the victim base station; receiving, by the DU of the victim base station, first information from the CU of the victim base station, the first information being used to indicate whether the DU of the victim base station transmits the RIM-RS; and determining, by the DU of the victim base station, whether to transmit the RIM-RS in accordance with the first information.

In some embodiments of the present disclosure, the CU of the victim base station receives the information indicating that the DU is subjected to the remote interference from the DU of the victim base station, and transmits the first information to the DU of the victim base station in accordance with the information.

According to the processing method in the embodiments of the present disclosure, it is able for the DU of the victim base station to transmit the RIM-RS when the remote interference is detected, thereby to manage the remote interference under the CU-DU architecture.

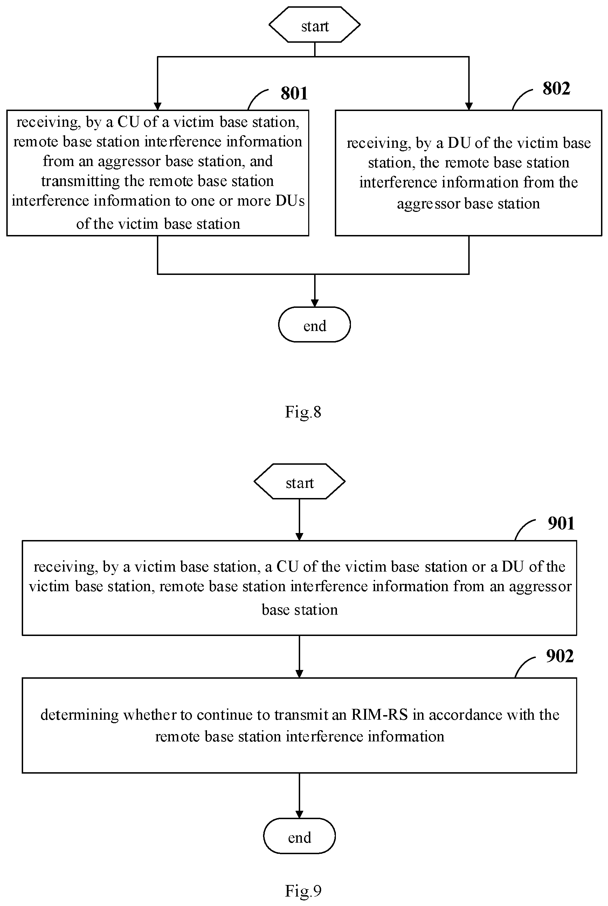

As shown in Fig.8, the present disclosure provides in some embodiments a processing method which describes a process of transmitting remote base station interference information under CU-DU architecture, and this method is executed by a victim base station (also called as first base station), a CU of the victim base station or a DU of the victim base station, which receives the remote base station interference information from an aggressor base station through Step 801 or 802. The processing method includes the following steps.

Step 801: receiving, by a CU of the victim base station, remote base station interference information from the aggressor base station, and transmitting, by the CU of the victim base station, the remote base station interference information to one or more DUs of the victim base station.

In some embodiments of the present disclosure, the CU of the victim base station receives the remote base station interference information from the aggressor base station through a backhaul network.

Step 802: receiving, by the DU of the victim base station, the remote base station interference information from the aggressor base station.

In some embodiments of the present disclosure, the DU of the aggressor base station receives the remote base station interference information from the aggressor base station through an air interface.

In some embodiments of the present disclosure, the remote base station interference information includes one or more of: second information indicating that the aggressor base station detects an RIM-RS from the victim base station; third information indicating that the remote base station interference disappears, the RIM-RS from the victim base station disappears or the aggressor base station fails to detect the RIM-RS from the victim base station; information indicating that the aggressor base station performs interference fallback; and identification information corresponding to the aggressor base station.

In some embodiments of the present disclosure, the identification information includes one or more of a base station set ID, a base station ID and a cell identifier.

The base station ID is identification information for differentiating different base stations, and the base station ID may be a gNB identity (gNB ID). The cell identifier is identification information for differentiating different cells, and the cell identifier may be a cell identity (cell ID).

According to the processing method in the embodiments of the present disclosure, it is able for the CU or DU of the victim base station to receive the remote base station interference information from the aggressor base station, thereby to manage the remote base station interference under the CU-DU architecture.

As shown in Fig.9, the present disclosure provides in some embodiments a processing method which describes a process of determining whether to continue to transmit an RIM-RS after a victim base station receives remote base station interference information from an aggressor base station, and the victim base station is also called as a first base station. The processing method includes: Step 901 of receiving, by the victim base station, a CU of the victim base station and a DU of the victim base station, remote base station interference information from an aggressor base station; and Step 902 of determining whether to continue to transmit the RIM-RS in accordance with the remote base station interference information.

In some embodiments of the present disclosure, Step 902 specifically includes the following modes.

### First mode

The DU of the victim base station determines whether to continue to transmit the RIM-RS in accordance with the remote base station interference information. It should be appreciated that, each DU of the victim base station individually determines whether to continue to transmit the RIM-RS.

### Second mode

The CU of the victim base station determines fourth information in accordance with the remote base station interference information, and the fourth information is used to indicate whether to transmit the RIM-RS by the DU of the victim base station. Then, the CU of the victim base station transmits the fourth information to the DU of the victim base station, and the DU of the victim base station determines whether to continue to transmit the RIM-RS in accordance with the fourth information.

According to the processing method in the embodiments of the present disclosure, it is able for the DU of the victim base station to determine whether to continue to transmit the RIM-RS after the victim base station receives the remote base station interference information, thereby to manage the remote base station interference under the CU-DU architecture.

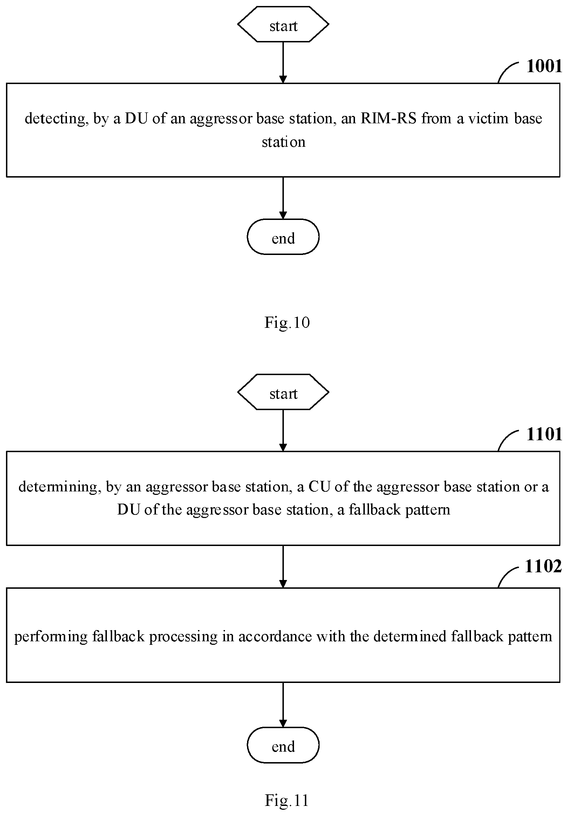

As shown in Fig.10, the present disclosure provides in some embodiments a processing method which describes a process of detecting, by an aggressor base station, an RIM-RS from a victim base station under CU-DU architecture, and the aggressor base station is also called as a second base station. The processing method includes Step 1001 of detecting, by a DU of the aggressor base station, the RIM-RS from the victim base station.

In some embodiments of the present disclosure, a time when the aggressor base station starts to detect the RIM-RS from the victim base station is triggered in the following modes.

### First mode

The DU of the aggressor base station determines whether to detect the RIM-RS from the victim base station, and if the DU of the aggressor base station determines to detect the RIM-RS from the victim base station, the DU of the aggressor base station detects the RIM-RS from the victim base station.

### Second mode

The DU of the aggressor base station determines whether an indicator or configuration is received from a network device, and the indicator or configuration is used to indicate whether the DU of the aggressor base station detects the RIM-RS from the victim base station. When the DU of the aggressor base station receives the indicator or configuration, the DU of the aggressor base station detects the RIM-RS from the victim base station. The network device is an OAM.

### Third mode

The DU of the aggressor base station determines whether to receive an indicator or configuration from a CU of the aggressor base station, and when the DU of the aggressor base station receives the indicator or configuration, the DU of the aggressor base station detects the RIM-RS from the victim base station.

In some embodiments of the present disclosure, the indicator or configuration from the CU of the aggressor base station is determined by the CU of the aggressor base station or the other device, and the other device is an OAM. When the indicator or configuration from the CU of the aggressor base station is determined by the CU of the aggressor base station, the CU of the aggressor base station directly transmits the indicator or configuration to one or more DUs of the aggressor base station. When the indicator or configuration from the CU of the aggressor base station is determined by the other device, the other device transmits the indicator or configuration to the one or more DUs of the aggressor base station through the CU of the aggressor base station. It should be appreciated that, the other device notifies the CU of the aggressor base station, and the CU of the aggressor base station selects to trigger one or more DUs of the aggressor base station to detect the RIM-RS from the victim base station.

According to the processing method in the embodiments of the present disclosure, it is able for the DU of the aggressor base station to detect the RIM-RS, thereby to manage the remote base station interference under the CU-DU architecture.

As shown in Fig.11, the present disclosure provides in some embodiments a processing method which describes a process of performing, by an aggressor base station, fallback processing under CU-DU architecture, and the aggressor base station is also called as a second base station. The processing method includes the following steps.

Step 1101: determining, by the aggressor base station, a CU of the aggressor base station or a DU of the aggressor base station, a fallback pattern.

In some embodiments of the present disclosure, the fallback pattern is determined in the following modes.

### First mode

The DU of the aggressor base station determines whether it is necessary to perform the fallback processing, and if the DU of the aggressor base station determines to perform the fallback processing, the DU of the aggressor base station determines the fallback pattern. It should be appreciated that, each DU connected to the CU of the aggressor base station individually determines the fallback pattern and performs the fallback processing.

### Second mode

The CU of the aggressor base station receives a fifth message and/or an interference measurement result from the DU of the aggressor base station, and the fifth message is used to indicate that an RIM-RS is received. Then, the CU of the aggressor base station transmits sixth information to the DU of the aggressor base station in accordance with the fifth message and/or the interference measurement result, and the sixth information is used to indicate whether to perform the fallback processing and/or the fallback pattern.

Step 1102: performing the fallback processing in accordance with the determined fallback pattern.

In some embodiments of the present disclosure, the fallback processing is specifically performed in the following modes.

### First mode

When the DU of the aggressor base station determines that it is necessary to perform the fallback processing, the DU of the aggressor base station performs the fallback processing in accordance with the determined fallback pattern.

### Second mode

The DU of the aggressor base station receives the sixth information from the CU of the aggressor base station, and performs the fallback processing in accordance with the sixth information.

According to the processing method in the embodiments of the present disclosure, it is able for the aggressor base station to perform the fallback processing under the CU-DU architecture, thereby to manage the remote base station interference under the CU-DU architecture.

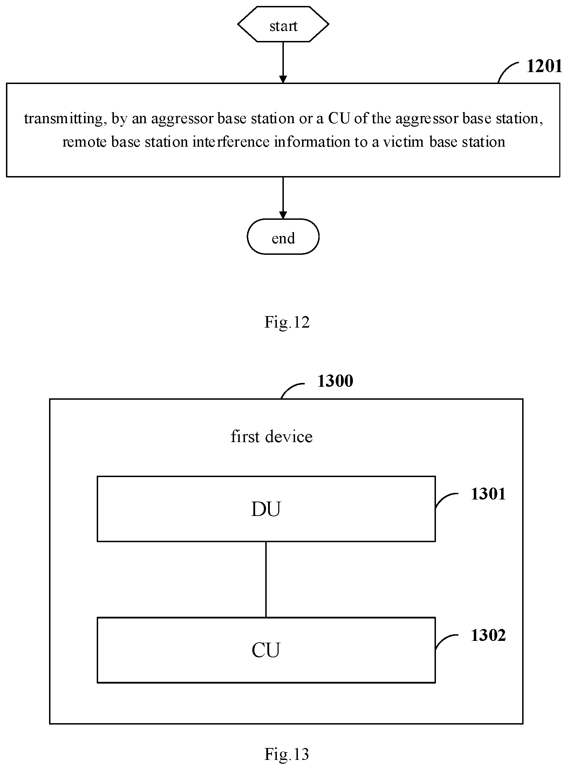

As shown in Fig.12, the present disclosure provides in some embodiments a processing method which describes a process of transmitting remote base station interference information to a victim base station under CU-DU architecture, and an aggressor base station is also called as a second base station. The processing method includes Step 1201 of transmitting, by the aggressor base station or a CU of the aggressor base station, the remote base station interference information to the victim base station.

In some embodiments of the present disclosure, the remote base station interference information includes one or more of: second information indicating that the aggressor base station detects an RIM-RS from the victim base station; third information indicating that the remote base station interference disappears, the RIM-RS from the victim base station disappears or the aggressor base station fails to detect the RIM-RS from the victim base station; information indicating that the aggressor base station performs interference fallback; and identification information corresponding to the aggressor base station.

The identification information includes one or more of a base station set ID, a base station ID and a cell identifier. For example, the identification information is one or more of Set ID, gNB ID and cell ID.

In some embodiments of the present disclosure, the CU of the aggressor base station transmits the remote base station interference information to the victim base station in the following modes.

### First mode

The CU of the aggressor base station receives the remote base station interference information from the DU of the aggressor base station, and transmits the remote base station interference information to the victim base station. The transmitting, by the CU of the aggressor base station, the remote base station interference information to the victim base station refers to that, the CU does not process the remote base station interference information transmitted by the DU, and transmits all information to the victim base station, where the all information includes the remote base station interference information detected by the DU of the aggressor base station, information about the cell ID and information about the set ID.

### Second mode

The CU of the aggressor base station merges the remote base station interference information from a plurality of DUs of the aggressor base station, and transmits the merged remote base station interference information to the victim base station. The transmitting, by the CU of the aggressor base station, the merged remote base station interference information to the victim base station refers to that, the aggressor base station does not need to transmit all information from the DU to the victim base station, e.g., the remote base station interference information detected by the DU of the aggressor base station, information about the cell ID and information about the set ID, merges information about the same victim base station set from the DU, and only transmits a victim base station set ID and the remote base station interference information, thereby saving signaling overhead. Specifically, for example, a cell of the DU of the aggressor base station detects the remote base station interference information corresponding to the same victim base station set ID, and transmits it to the CU of the aggressor base station, and the CU of the aggressor base station only transmits information including the remote base station interference information and the victim base station set ID.

In some embodiments of the present disclosure, the remote base station interference information is specifically transmitted in the following modes.

### First mode

The CU of the aggressor base station transmits the remote base station interference information to the victim base station through a network element. For example, the CU of the aggressor base station transmits the remote base station interference information to the victim base station directly via an interface between the base stations, or transmits the remote base station interference information to another network element and then the network element transmits the remote base station interference information to the victim base station.

The aggressor base station or the CU of the aggressor base station determines identification information about the victim base station, and transmits the remote base station interference information to the victim base station corresponding to the identification information. The identification information about the victim base station is a base station ID or a cell identifier. For example, the aggressor base station obtains a Tracking Area Identity (TAI), a gNB ID or a cell ID in accordance with a set ID received through the RIM-RS, and transmits information to the victim base station with the gNB ID or the cell ID as a target address.

To be specific, the aggressor base station or the CU of the aggressor base station transmits the remote base station interference information to the victim base station corresponding to the identification information with the identification information about the victim base station as the target address. It should be appreciated that, the CU of the aggressor base station directly transmits the remote base station interference information to the victim base station corresponding to the identification information with the identification information about the victim base station as the target address.

Alternatively, the aggressor base station or the CU of the aggressor base station transmits the remote base station interference information to a core network, and the core network transmits the remote base station interference information to the victim base station corresponding to the identification information with the identification information about the victim base station as the target address.

### Second mode

The aggressor base station or the CU of the aggressor base station transmits the remote base station interference information to the victim base station through the core network. For example, the CU of the aggressor base station at first transmits information about the set ID received through the RIM-RS and information to be transmitted to the victim base station to the core network. Then, the core network merges the information from a plurality of aggressor base stations, obtains the gNB ID or cell ID in accordance with the information about the set ID, and transmits the merged information to the victim base station.

Further, the aggressor base station or the CU of the aggressor base station determines a set ID of the victim base stations, and transmits the set ID and the remote base station interference information to the core network. Then, the core network determines a target victim base station in accordance with the set ID of the victim base stations and transmits the remote base station interference information to the target victim base station, or the core network process the remote base station interference information from a plurality of aggressor base stations and transmits the processed remote base station interference information to the target victim base station.

It should be appreciated that, upon the receipt of the set ID of the victim base stations and the remote base station interference information, the core network determines the target victim base station in accordance with the set ID of the victim base stations, and directly transmits the remote base station interference information to the target victim base station. Alternatively, the core network merges the remote base station interference information from a plurality of aggressor base stations, and transmits the merged remote base station interference information to the target victim base station.

It should be appreciated that, the core network includes one or more network elements. Related information is capable of being forwarded between the network elements, and the related information is forwarded to the first base station through the network element related to the first base station.

It should be appreciated that, the target victim base station includes one or more victim base stations corresponding to the set ID.

According to the processing method in the embodiments of the present disclosure, it is able for the CU of the aggressor base station to transmit the remote base station interference information to the victim base station, thereby to manage the remote base station interference under the CU-DU architecture.

In order to manage the remote base station interference under the CU-DU architecture, the present disclosure further provides in some embodiments a first device. A principle for solving the problem by the first device is similar to that of the processing method mentioned hereinabove, so the implementation of the first device may refer to that of the processing method, which will thus not be particularly defined herein.

As shown in Fig.13, the present disclosure provides in some embodiments a first device 1300, which includes a DU 1301 and a CU 1302. The DU 1301 or CU 1302 of the first device is configured to determine a base station set identity and/or a configuration of an RIM-RS resource. The first device is an aggressor base station or a victim base station.

In a possible embodiment of the present disclosure, the configuration of the RIM-RS resource is associated with the base station set ID.

In a possible embodiment of the present disclosure, the base station set ID and/or the configuration of the RIM-RS resource are preset by the DU of the first device.

In a possible embodiment of the present disclosure, the DU 1301 of the first device is further configured to receive the base station set ID and/or the configuration of the RIM-RS resource from the other device.

In a possible embodiment of the present disclosure, the other device is an OAM.

In a possible embodiment of the present disclosure, a same base station set ID and a same RIM-RS resource, or different base station set IDs and different RIM-RS resources, are configured for different DUs connected to the CU of the first device.

In a possible embodiment of the present disclosure, the base station set ID and/or the configuration of the RIM-RS resource are preset by the CU of the first device.

In a possible embodiment of the present disclosure, the CU 1302 of the first device is further configured to receive the base station set ID and/or the configuration of the RIM-RS resource from the other device, and transmit the base station set ID and/or the configuration of the RIM-RS resource to one or more DUs connected to the CU.

In a possible embodiment of the present disclosure, the CU 1302 of the first device is further configured to, when a remote base station interference occurs, determine the base station set ID and/or the configuration of the RIM-RS resource in accordance with information about the remote base station interference.

In a possible embodiment of the present disclosure, the CU 1302 of the first device is further configured to, when the remote base station interference occurs, receive the information about the remote base station interference from the DU of the first device, enable one or more DUs to form a set in accordance with the information about the remote base station interference, and transmits the base station set ID corresponding to the set and/or the configuration of the RIM-RS resource to the one or more DUs connected to the CU.

The first device in the embodiments of the present disclosure is capable of implementing the method in Fig.6, which will thus not be particularly defined herein.

According to the first device in the embodiments of the present disclosure, it is able for an aggressor base station or a victim base station to determine the base station set ID and/or the configuration of the RIM-RS resource under the CU-DU architecture, thereby to enable the first device to manage the remote base station interference under the CU-DU architecture.

In order to manage the remote base station interference under the CU-DU architecture, the present disclosure further provides in some embodiments a victim base station. A principle for solving the problem by the victim base station is similar to that of the processing method mentioned hereinabove, so the implementation of the victim base station may refer to that of the processing method, which will thus not be particularly defined herein.

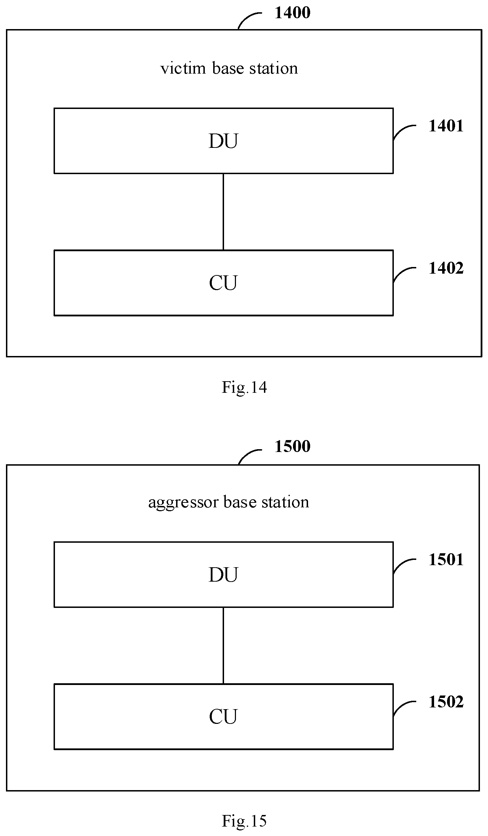

As shown in Fig. 14, the present disclosure further provides in some embodiments a victim base station 1400, also called as a first base station, which includes a DU 1401 and a CU 1402. The DU 1401 of the victim base station is configured to detect a remote interference, and when the remote interference is detected, determine whether to transmit an RIM-RS.

In a possible embodiment of the present disclosure, the DU 1401 of the victim base station is further configured to, when the remote interference is detected, determine whether to transmit the RIM-RS.

In a possible embodiment of the present disclosure, the DU 1401 of the victim base station is further configured to: when the remote interference is detected, transmit information indicating that the DU is subjected to the remote base station interference to the CU of the victim base station; receive first information from the CU of the victim base station, the first information being used to indicate whether to transmit the RIM-RS by the DU of the victim base station; and determine whether to transmit the RIM-RS in accordance with the first information.

The victim base station in the embodiments of the present disclosure is capable of implementing the method in Fig.7, which will thus not be particularly defined herein.

According to the victim base station in the embodiments of the present disclosure, it is able for the DU of the victim base station to transmit the RIM-RS when the remote interference is detected, thereby to enable the victim base station to manage the remote base station interference under the CU-DU architecture.

In order to manage the remote base station interference under the CU-DU architecture, the present disclosure further provides in some embodiments a victim base station. A principle for solving the problem by the victim base station is similar to that of the processing method mentioned hereinabove, so the implementation of the victim base station may refer to that of the processing method, which will thus not be particularly defined herein.

As shown in Fig. 14, the present disclosure further provides in some embodiments a victim base station 1400, which includes a DU 1401 and a CU 1402. The CU 1402 of the victim base station is configured to receive remote base station interference information from an aggressor base station and transmit the remote base station interference information to one or more DUs of the victim base station, or the DU 1401 of the victim base station is configured to receive the remote base station interference information from the aggressor base station.

In a possible embodiment of the present disclosure, the remote base station interference information includes one or more of: second information indicating that the aggressor base station detects an RIM-RS from the victim base station; third information indicating that the remote base station interference disappears, the RIM-RS from the victim base station disappears or the aggressor base station fails to detect the RIM-RS from the victim base station; information indicating that the aggressor base station performs interference fallback; and identification information corresponding to the aggressor base station.

In a possible embodiment of the present disclosure, the identification information includes one or more of a base station set ID, a base station ID and a cell ID.

The victim base station in the embodiments of the present disclosure is capable of implementing the method in Fig.8, which will thus not be particularly defined herein.

According to the victim base station in the embodiments of the present disclosure, it is able for the CU or DU of the victim base station to receive the remote base station interference information from the aggressor base station, thereby to enable the victim base station to manage the remote base station interference under the CU-DU architecture.

In order to manage the remote base station interference under the CU-DU architecture, the present disclosure further provides in some embodiments a victim base station. A principle for solving the problem by the victim base station is similar to that of the processing method mentioned hereinabove, so the implementation of the victim base station may refer to that of the processing method, which will thus not be particularly defined herein.

As shown in Fig. 14, the present disclosure further provides in some embodiments a victim base station 1400, which includes a DU 1401 and a CU 1402. The CU 1402 or DU 1401 of the victim base station is configured to receive remote base station interference information from an aggressor base station, and the DU 1401 of the victim base station is further configured to determine whether to continue to transmit an RIM-RS in accordance with the remote base station interference information.

In a possible embodiment of the present disclosure, the DU 1401 of the victim base station is further configured to determine whether to continue to transmit an RIM-RS in accordance with the remote base station interference information.

In a possible embodiment of the present disclosure, the CU 1402 of the victim base station is further configured to: determine fourth information in accordance with the remote base station interference information, the fourth information being used to indicate whether to transmit the RIM-RS by the DU of the victim base station; and transmit the fourth information to the DU of the victim base station. The DU 1401 of the victim base station is further configured to determine whether to continue to transmit the RIM-RS in accordance with the fourth information.

The victim base station in the embodiments of the present disclosure is capable of implementing the method in Fig.9, which will thus not be particularly defined herein.

According to the victim base station in the embodiments of the present disclosure, it is able for the DU of the victim base station to determine whether to continue to transmit the RIM-RS after the victim base station receives the remote base station interference information, thereby to enable the victim base station to manage the remote base station interference under the CU-DU architecture.

In order to manage the remote base station interference under the CU-DU architecture, the present disclosure further provides in some embodiments an aggressor base station. A principle for solving the problem by the aggressor base station is similar to that of the processing method mentioned hereinabove, so the implementation of the aggressor base station may refer to that of the processing method, which will thus not be particularly defined herein.

As shown in Fig.15, the present disclosure further provides in some embodiments an aggressor base station 1500, also called as a second base station, which includes a DU 1501 and a CU 1502. The DU 1501 of the aggressor base station is configured to detect an RIM-RS from a victim base station.

In a possible embodiment of the present disclosure, the DU 1501 of the aggressor base station is further configured to determine whether to detect the RIM-RS from the victim base station, and detect the RIM-RS from the victim base station if the DU 1501 of the aggressor base station determines to detect the RIM-RS from the victim base station.

In a possible embodiment of the present disclosure, the DU 1501 of the aggressor base station is further configured to: determine whether an indicator or configuration is received from a network device, the indicator or configuration being used to indicate whether to detect the RIM-RS from the victim base station by the DU of the aggressor base station; and when the indicator or configuration is received, detect the RIM-RS from the victim base station.

In a possible embodiment of the present disclosure, the network device is an OAM.

In a possible embodiment of the present disclosure, the DU 1501 of the aggressor base station is further configured to: determine whether to receive an indicator or configuration from the CU of the aggressor base station; and when the indicator or configuration is received, detect the RIM-RS from the victim base station.

The aggressor base station in the embodiments of the present disclosure is capable of implementing the method in Fig.10, which will thus not be particularly defined herein.

According to the aggressor base station in the embodiments of the present disclosure, it is able for the DU of the aggressor base station to detect the RIM-RS, thereby to enable the aggressor base station to manage the remote base station interference under the CU-DU architecture.

In order to manage the remote base station interference under the CU-DU architecture, the present disclosure further provides in some embodiments an aggressor base station. A principle for solving the problem by the aggressor base station is similar to that of the processing method mentioned hereinabove, so the implementation of the aggressor base station may refer to that of the processing method, which will thus not be particularly defined herein.

As shown in Fig.15, the present disclosure provides in some embodiments an aggressor base station 1500 which includes a DU 1501 and a CU 1502. The CU 1502 or DU 1501 of the aggressor base station is configured to determine a fallback pattern, and the DU 1501 of the aggressor base station is further configured to perform fallback processing in accordance with the determined fallback pattern.

In a possible embodiment of the present disclosure, the DU 1501 of the aggressor base station is further configured to: determine whether it is necessary to perform fallback processing; when it is necessary to perform the fallback processing, determine a fallback pattern; and perform the fallback processing in accordance with the determined fallback pattern.

In a possible embodiment of the present disclosure, the CU 1502 of the aggressor base station is further configured to: receive a first message and/or an interference measurement result from the DU of the aggressor base station, where the fifth message is used to indicate that the RIM-RS is received from the victim base station; and transmit sixth information to the DU of the aggressor base station in accordance with the fifth message and/or the interference measurement result, where the sixth information is used to indicate whether to perform the fallback processing and/or the fallback pattern.

In a possible embodiment of the present disclosure, the DU 1501 of the aggressor base station is further configured to receive the sixth information from the CU of the aggressor base station, and perform the fallback processing in accordance with the sixth information.

The aggressor base station in the embodiments of the present disclosure is capable of implementing the method in Fig. 11, which will thus not be particularly defined herein.

According to the aggressor base station in the embodiments of the present disclosure, it is able for the aggressor base station to perform the fallback processing under the CU-DU architecture, thereby to enable the aggressor base station to manage the remote base station interference under the CU-DU architecture.

In order to manage the remote base station interference under the CU-DU architecture, the present disclosure further provides in some embodiments an aggressor base station. A principle for solving the problem by the aggressor base station is similar to that of the processing method mentioned hereinabove, so the implementation of the aggressor base station may refer to that of the processing method, which will thus not be particularly defined herein.

Referring to Fig.15 again, the present disclosure further provides in some embodiments an aggressor base station 1500 which includes a DU 1501 and a CU 1502. The CU 1502 of the aggressor base station is configured to transmit remote base station interference information to a victim base station.

In a possible embodiment of the present disclosure, the remote base station interference information includes one or more of: second information indicating that the aggressor base station detects an RIM-RS from the victim base station; third information indicating that the remote base station interference disappears, the RIM-RS from the victim base station disappears or the aggressor base station fails to detect the RIM-RS from the victim base station; information indicating that the aggressor base station performs interference fallback; and identification information corresponding to the aggressor base station.

In a possible embodiment of the present disclosure, the identification information includes one or more of a base station set ID, a base station ID and a cell ID.

In a possible embodiment of the present disclosure, the CU 1502 of the aggressor base station is further configured to determine identification information about the victim base station, and transmit the remote base station interference information to the victim base station corresponding to the identification information.

In a possible embodiment of the present disclosure, the CU 1502 of the aggressor base station is further configured to: transmit the remote base station interference information to the victim base station corresponding to the identification information with the identification information about the victim base station as a target address; or transmit the remote base station interference information to a core network, so that the core network transmits the remote base station interference information to the victim base station corresponding to the identification information with the identification information about the victim base station as the target address.

In a possible embodiment of the present disclosure, the CU 1502 of the aggressor base station is further configured to: receive the remote base station interference information from the DU of the aggressor base station; and transmit the remote base station interference information to the victim base station.

In a possible embodiment of the present disclosure, the CU 1502 of the aggressor base station is further configured to: merge the remote base station interference information from a plurality of DUs of the aggressor base station; and transmit the merged remote base station interference information to the victim base station.

In a possible embodiment of the present disclosure, the CU 1502 of the aggressor base station is further configured to transmit the remote base station interference information to the victim base station through a network element.

In a possible embodiment of the present disclosure, the CU 1502 of the aggressor base station is further configured to transmit the remote base station interference information to the victim base station through a core network.

In a possible embodiment of the present disclosure, the CU 1502 of the aggressor base station is further configured to: determine a set ID of victim base stations; and transmit the set ID of the victim base stations and the remote base station interference information to the core network, so that the core network determines a target victim base station in accordance with the set ID of the victim base stations and transmits the remote base station interference information to the target victim base station, or processes the remote base station interference information from a plurality of aggressor base stations and transmits the processed remote base station interference information to the target victim base station. The aggressor base station in the embodiments of the present disclosure is capable of implementing the method in Fig. 12, which will thus not be particularly defined herein.

According to the aggressor base station in the embodiments of the present disclosure, it is able for the CU of the aggressor base station to transmit the remote base station interference information to the victim base station, thereby to enable the first device to manage the remote base station interference under the CU-DU architecture.

In order to manage the remote base station interference under the CU-DU architecture, the present disclosure further provides in some embodiments a first device. A principle for solving the problem by the first device is similar to that of the processing method mentioned hereinabove, so the implementation of the first device may refer to that of the processing method, which will thus not be particularly defined herein.

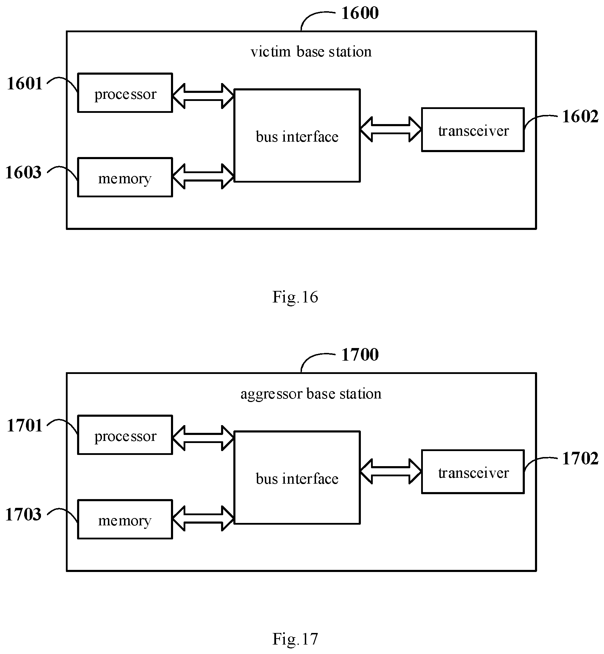

As shown in Fig. 16, the present disclosure further provides in some embodiments a victim base station 1600, also called as a first base station, which includes a processor 1601, a transceiver 1602, a memory 1603 and a bus interface. The processor 1601 takes charge of managing the bus architecture as well as general processings. The memory 1603 stores therein data for the operation of the processor 1601.

In some embodiments of the present disclosure, the victim base station 1600 further includes a program stored in the memory 1603 and executed by the processor 1601. The program is executed by the processor 1601 so as to implement the steps of the above-mentioned methods.

In Fig. 16, bus architecture includes a number of buses and bridges connected to each other, so as to connect various circuits for one or more processors 1601 and one or more memories 1603. In addition, as is known in the art, the bus architecture is used to connect any other circuits, such as a circuit for a peripheral device, a circuit for a voltage stabilizer and a power management circuit. The bus interface is provided, and the transceiver 1602 consists of a plurality of elements, i.e., a transmitter and a receiver for communication with any other devices over a transmission medium.

In order to manage the remote base station interference under the CU-DU architecture, the present disclosure further provides in some embodiments a victim base station. A principle for solving the problem by the victim base station is similar to that of the processing method mentioned hereinabove, so the implementation of the victim base station may refer to that of the processing method, which will thus not be particularly defined herein.

As shown in Fig.17, the present disclosure provides in some embodiments an aggressor base station 1700, also called as a second base station, which includes a processor 1701, a transceiver 1702, a memory 1703 and a bus interface. The processor 1701 takes charge of managing the bus architecture as well as general processings. The memory 1703 stores therein data for the operation of the processor 1701.

In some embodiments of the present disclosure, the victim base station 1700 further includes a program stored in the memory 1703 and executed by the processor 1701. The program is executed by the processor 1701 so as to implement the steps of the above-mentioned methods.

In Fig. 17, bus architecture includes a number of buses and bridges connected to each other, so as to connect various circuits for one or more processors 1701 and one or more memories 1703. In addition, as is known in the art, the bus architecture is used to connect any other circuits, such as a circuit for a peripheral device, a circuit for a voltage stabilizer and a power management circuit. The bus interface is provided, and the transceiver 1702 consists of a plurality of elements, i.e., a transmitter and a receiver for communication with any other devices over a transmission medium.

The steps of the methods or algorithm described in conjunction with the contents mentioned hereinabove may be implemented through hardware, or implemented by a processor executing instructions. The instructions may consist of corresponding modules stored in a Random Access Memory (RAM), a flash memory, a Read-Only Memory (ROM), an Electrically Programmable ROM (EPROM), an Erasable EPROM (EEPROM), a register, a hard disk, a mobile hard disk, a read-only optic disk, or any other known storage medium. Illustratively, the storage medium may be connected to the processor, so that the processor is capable of reading information from the storage medium and writing information into the storage medium. Of course, the storage medium may be a component of the processor. The processor and the storage medium may be located in an Application Specific Integrated Circuit (ASIC). In addition, the ASIC may be located in an interface device of a core network. Of course, the processor and the storage medium may be located in the interface device of the core network as discrete assemblies.

It should be appreciated that, the functions described in one or more embodiments of the present disclosure may be achieved through hardware, software, firmware or a combination thereof. When the functions are achieved through software, these functions may be stored in the computer-readable medium or transmitted as one or more instructions or codes on the computer-readable medium. The computer-readable medium may include a computer-readable storage medium and a communication medium. The communication medium may include any medium capable of transmitting a computer program from one place to another place. The storage medium may include any available medium capable of being accessed by a general-purpose or dedicated computer.

It should be appreciated that, the embodiments of the present disclosure may be implemented by hardware, software, firmware, middleware, microcode or a combination thereof. For the hardware implementation, the processor may include one or more of an ASIC, a digital signal processor (Digital Signal Processor, DSP), a DSP device (DSPD), a programmable logic device (Programmable Logic Device, PLD), a Field-Programmable Gate Array (FPGA), a general-purpose processor, a controller, a microcontroller, a microprocessor, any other electronic unit capable of achieving the functions in the present disclosure, or a combination thereof.

Hence, the purposes of the present disclosure may also be implemented by one program or a set of programs running on any computing device, e.g., a known general-purpose computer, or implemented merely by a program product including programs codes capable of implementing the method or device. In other words, this program product and a storage medium storing therein the program product also constitute a part of the present disclosure. Obviously, the storage medium may be any known storage medium or a storage medium that may occur in future. It should be further appreciated that, according to the device and the method in the embodiments of the present disclosure, the members and/or steps may be subdivided and/or recombined, which shall also be deemed as equivalents of the present disclosure. In addition, the steps for executing the above-mentioned processings may be performed in a chronological order. Of course, some steps may also be performed in parallel, or independently of each other.

The objects, the technical solutions and the beneficial effects of the present disclosure have been described hereinabove in details. It should be appreciated that, the above description may be for illustrative purposes only, but shall not be used to limit the scope of the present disclosure. The scope of the present disclosure is defined by the appended claims.

It should be appreciated that, the present disclosure may be provided as a method, a system or a computer program product, so the present disclosure may be in the form of full hardware embodiments, full software embodiments, or combinations thereof. In addition, the present disclosure may be in the form of a computer program product implemented on one or more computer-readable storage mediums (including but not limited to disk memory, compact disc-read only memory (Compact Disc-Read Only Memory, CD-ROM) and optical memory) including computer-readable program codes.

The present disclosure has been described with reference to the flow charts and/or block diagrams of the method, device (system) and computer program product according to the embodiments of the present disclosure. It should be understood that computer program instructions may be used to implement each of the work flows and/or blocks in the flow charts and/or the block diagrams, and the combination of the work flows and/or blocks in the flow charts and/or the block diagrams. These computer program instructions may be provided to a processor of a common computer, a dedicated computer, an embedded processor or any other programmable data processing devices to create a machine, so that instructions capable of being executed by the processor of the computer or the other programmable data processing devices may create a device to achieve the functions assigned in one or more work flows in the flow chart and/or one or more blocks in the block diagram.

These computer program instructions may also be stored in a computer readable storage that may guide the computer or the other programmable data process devices to function in a certain way, so that the instructions stored in the computer readable storage may create a product including an instruction unit which achieves the functions assigned in one or more flows in the flow chart and/or one or more blocks in the block diagram.

These computer program instructions may also be loaded in the computer or the other programmable data process devices, so that a series of operation steps are executed on the computer or the other programmable devices to create processes achieved by the computer. Therefore, the instructions executed in the computer or the other programmable devices provide the steps for achieving the function assigned in one or more flows in the flow chart and/or one or more blocks in the block diagram.

The above embodiments are for illustrative purposes only, but the present disclosure is not limited thereto. Obviously, a person skilled in the art may make further modifications and improvements without departing from the scope of the present invention as defined by the appended claims.

## Claims

1. A processing method, comprising:
determining (601), by a first device, a base station set identity, ID, and/or a configuration of a Remote Interference Management-Reference Signal, RIM-RS, resource, wherein the first device is an aggressor base station or a victim base station, and the first device comprises: a Distributed Unit, DU, and a Centralized Unit, CU ;
wherein when the first device is the victim base station, the method further comprises:
detecting (701), by the DU of the first device, a remote interference; and
determining (702), by the CU or the DU of the device, to transmit an RIM-RS when the DU of the first device detects the remote interference;
wherein the determining, by the CU or the DU of the first device, to transmit the RIM-RS when the DU of the first device detects the remote interference comprises:
transmitting, by the DU of the first device, the RIM-RS when the DU of the first device detects the remote interference.

2. The processing method according to claim 1, wherein the configuration of the RIM-RS resource is associated with the base station set ID.

3. The processing method according to claim 1, wherein the base station set ID and/or the configuration of the RIM-RS resource are preset by the Distributed Unit, DU, of the first device; or
the base station set ID and/or the configuration of the RIM-RS resource are preset by the CU of the first device.

4. The processing method according to claim 1, wherein the determining (601), by the first device, the base station set ID and/or the configuration of the RIM-RS resource comprises:
receiving, by the DU of the first device, the base station set ID and/or the configuration of the RIM-RS resource from the other device; or
receiving, by the CU of the first device, the base station set ID and/or the configuration of the RIM-RS resource; and transmitting, by the CU of the first device, the base station set ID and/or the configuration of the RIM-RS resource to one or more DUs connected to the CU; or
determining, by the CU of the first device, the base station set ID and/or the configuration of the RIM-RS resource in accordance with information about a remote base station interference when the remote base station interference occurs;
wherein the other device is an Operation Administration and Maintenance, OAM.

5. The processing method according to claim 3 or 4, wherein a same base station set ID and a same RIM-RS resource, or different base station set IDs and different RIM-RS resources, are configured for different DUs connected to the Centralized Unit, CU, of the first device.

6. The processing method according to claim 4, wherein the determining, by the CU of the first device, the base station set ID and/or the configuration of the RIM-RS resource in accordance with information about the remote base station interference when the remote base station interference occurs comprises:
receiving, by the CU of the first device, the information about the remote base station interference from a DU of the first device when the remote base station interference occurs;
enabling, by the CU of the first device, one or more DUs to form a set in accordance with the information about the remote base station interference; and
transmitting, by the CU of the first device, the base station set ID corresponding to the set and/or the configuration of the RIM-RS resource to one or more DUs connected to the CU.

7. The processing method according to claim 1, wherein the determining, by the CU or the DU of the first device, to transmit the RIM-RS when the DU of the first device detects the remote interference comprises:
transmitting, by the DU of the first device, information indicating that the DU is subjected to the remote interference to a CU of the first device when the DU of the first device detects the remote interference;
receiving, by the DU of the first device, first information from the CU of the first device, the first information being used to indicate that the DU of the first device transmits the RIM-RS; and
transmitting, by the DU of the first device, the RIM-RS in accordance with the first information.

8. The processing method according claim 1, wherein when the first device is the aggressor base station, the method further comprises: transmitting (1201), the first device or the CU of the first device, remote base station interference information to the victim base station.

9. The processing method according to claim 8, wherein the remote base station interference information comprises one or more of:
second information indicating that the first device detects an RIM-RS from the victim base station;
third information indicating that the remote base station interference disappears, the RIM-RS from the victim base station disappears or the first device fails to detect the RIM-RS from the victim base station;
information indicating that the first device performs interference fallback; and
identification information corresponding to the first device.

10. The processing method according to claim 8, wherein the transmitting (1201), by the first device or the CU of the first device, the remote base station interference information to the victim base station comprises:
determining, by the first device or the CU of the first device, identification information about the victim base station; and transmitting, by the first device or the CU of the first device, the remote base station interference information to the victim base station corresponding to the identification information; or
transmitting, by the first device or the CU of the first device, the remote base station interference information to the victim base station through a network element; or
transmitting, by the first device or the CU of the first device, the remote base station interference information to the victim base station through a core network.

11. The processing method according to claim 10, wherein the transmitting (1201), by the first device or the CU of the first device, the remote base station interference information to the victim base station corresponding to the identification information comprises:
transmitting, by the first device or the CU of the first device, the remote base station interference information to the victim base station corresponding to the identification information with the identification information about the victim base station as a target address; or
transmitting, by the first device or the CU of the first device, the remote base station interference information to a core network, so that the core network transmits the remote base station interference information to the victim base station corresponding to the identification information with the identification information about the victim base station as the target address.

12. The processing method according to claim 8, wherein the transmitting (1201), by the CU of the first device, the remote base station interference information to the victim base station comprises:
receiving, by the CU of the first device, the remote base station interference information from the DU of the first device; and
transmitting, by the CU of the first device, the remote base station interference information to the victim base station; or
the transmitting, by the CU of the first device, the remote base station interference information to the victim base station comprises:
merging, by the CU of the first device, the remote base station interference information from a plurality of DUs of the first device; and
transmitting, by the CU of the first device, the merged remote base station interference information to the victim base station.

13. A communication device (1300), comprising: a Distributed Unit, DU, (1301) and a Centralized Unit, CU, (1302); wherein
the DU (1301) or the CU (1302) of the communication device is configured to determine a base station set ID and/or a configuration of a Remote Interference Management-Reference Signal, RIM-RS, resource, and the communication device is an aggressor base station or a victim base station;
wherein when the communication device is the victim base station, the DU of the communication device is configured to detect a remote interference, and the DU of the communication device is further configured to, when the DU of the communication device detects the remote interference, transmit an RIM-RS.

## Patentansprüche

1. Verarbeitungsverfahren mit den Schritten:
Bestimmen (601) einer Basisstationssatz-Identität, ID, und/oder einer Konfiguration einer RIM-RS-Ressource (Remote Interference Management-Reference Signal, Fernstörungsmanagement-Referenzsignal) durch ein erstes Gerät, wobei das erste Gerät eine Angreifer-Basisstation oder eine Opfer-Basisstation ist und das erste Gerät eine verteilte Einheit, DU, und eine zentralisierte Einheit, CU, umfasst;
wobei, wenn das erste Gerät die Opfer-Basisstation ist, das Verfahren ferner umfasst:
Erfassen (701) einer Fernstörung durch die DU des ersten Geräts; und
Entscheiden (702) zum Senden eines RIM-RS durch die CU oder die DU des Geräts, wenn die DU des ersten Geräts die Fernstörung erkennt;
wobei das Entscheiden zum Senden des RIM-RS durch die CU oder die DU des ersten Geräts, wenn die DU des ersten Geräts die Fernstörung erkennt, umfasst:
Senden des RIM-RS durch die DU des ersten Geräts, wenn die DU des ersten Geräts die Fernstörung erkennt.

2. Verarbeitungsverfahren nach Anspruch 1, bei dem die Konfiguration der RIM-RS-Ressource mit der Basisstationssatz-ID verknüpft ist.

3. Verarbeitungsverfahren nach Anspruch 1, bei dem die Basisstationssatz-ID und/oder die Konfiguration der RIM-RS-Ressource durch die verteilte Einheit (DU) des ersten Geräts voreingestellt werden; oder
die Basisstationssatz-ID und/oder die Konfiguration der RIM-RS-Ressource durch die CU des ersten Geräts voreingestellt werden.

4. Verarbeitungsverfahren nach Anspruch 1, bei dem das Bestimmen (601) der Basisstationssatz-ID und/oder der Konfiguration der RIM-RS-Ressource durch das erste Gerät umfasst:
Empfangen der Basisstationssatz-ID und/oder der Konfiguration der RIM-RS-Ressource durch die DU des ersten Geräts von dem anderen Gerät; oder
Empfangen der Basisstationssatz-ID und/oder der Konfiguration der RIM-RS-Ressource durch die CU des ersten Geräts; und Senden der Basisstationssatz-ID und/oder der Konfiguration der RIM-RS-Ressource durch die CU des ersten Geräts an eine oder mehrere mit der CU verbundene DUs; oder
Bestimmen der Basisstationssatz-ID und/oder der Konfiguration der RIM-RS-Ressource durch die CU des ersten Geräts anhand von Information über eine Fernstörung einer Basisstation, wenn die Fernstörung der Basisstation auftritt;
wobei das andere Gerät ein Betriebsverwaltungs- und Wartungssystem (OAM) ist.

5. Verarbeitungsverfahren nach Anspruch 3 oder 4, bei dem eine gleiche Basisstationssatz-ID und eine gleiche RIM-RS-Ressource oder verschiedene Basisstationssatz-IDs und verschiedene RIM-RS-Ressourcen für verschiedene DUs konfiguriert sind, die mit der zentralen Einheit (CU) des ersten Geräts verbunden sind.

6. Verarbeitungsverfahren nach Anspruch 4, bei dem das Bestimmen der Basisstationssatz-ID und/oder der Konfiguration der RIM-RS-Ressource durch die CU des ersten Geräts anhand von Information über die Fernstörung der Basisstation, wenn die Fernstörung der Basisstation auftritt, umfasst:
Empfangen der Information über die Fernstörung der Basisstation durch die CU des ersten Geräts von einer DU des ersten Geräts, wenn die Fernstörung der Basisstation auftritt;
Zulassen, durch die CU des ersten Geräts, dass eine oder mehrere DUs anhand der Information über die Fernstörung der Basisstation einen Satz bilden; und
Senden der Basisstationssatz-ID, die dem Satz entspricht, und/oder der Konfiguration der RIM-RS-Ressource durch die CU des ersten Geräts an eine oder mehrere DUs, die mit der CU verbunden sind.

7. Verarbeitungsverfahren nach Anspruch 1, bei dem das Entscheiden zum Senden des RIM-RS durch die CU oder die DU des ersten Geräts, wenn die DU des ersten Geräts die Fernstörung erkennt, umfasst:
Senden von Information, die angibt, dass die DU der Fernstörung ausgesetzt ist, durch die DU des ersten Geräts an eine CU des ersten Geräts, wenn die DU des ersten Geräts die Fernstörung erkennt;
Empfangen von erster Information von der CU des ersten Geräts durch die DU des ersten Geräts, wobei die erste Information verwendet wird, um anzuzeigen, dass die DU des ersten Geräts das RIM-RS sendet, und
Senden des RIM-RS durch die DU des ersten Geräts anhand der ersten Information.

8. Verarbeitungsverfahren nach Anspruch 1, bei dem, wenn das erste Gerät die Angreifer-Basisstation ist, das Verfahren ferner umfasst: Senden (1201) der Information über die Fernstörung der Basisstation durch das erste Gerät oder die CU des ersten Geräts an die Opfer-Basisstation.

9. Verarbeitungsverfahren nach Anspruch 8, bei dem die Information über die Fernstörung der Basisstation eines oder mehrere von:
zweiter Information, die anzeigt, dass das erste Gerät ein RIM-RS von der Opfer-Basisstation erkennt;
dritter Information, die anzeigt, dass die Fernstörung der Basisstation verschwindet, das RIM-RS von der Opfer-Basisstation verschwindet oder das erste Gerät das RIM-RS von der Opfer-Basisstation nicht erkennt;
Information, die anzeigt, dass das erste Gerät einen Störungsfallback durchführt; und
Identifikationsinformation, die dem ersten Gerät entspricht, umfasst.

10. Verarbeitungsverfahren nach Anspruch 8, bei dem das Senden (1201) der Information über die Fernstörung der Basisstation an die Opfer-Basisstation durch das erste Gerät oder die CU des ersten Geräts umfasst:
Bestimmen von Identifikationsinformation über die Opfer-Basisstation durch das erste Gerät oder die CU des ersten Geräts; und Senden der Information über die Fernstörung der Basisstation an die Opfer-Basisstation entsprechend der Identifikationsinformation durch das erste Gerät oder die CU des ersten Geräts; oder
Senden der Information über die Fernstörung der Basisstation an die Opfer-Basisstation durch das erste Gerät oder die CU des ersten Geräts über ein Netzwerkelement; oder
Senden der Information über die Fernstörung der Basisstation durch das erste Gerät oder die CU des ersten Geräts an die Opfer-Basisstation über ein Kernnetzwerk.

11. Verarbeitungsverfahren nach Anspruch 10, bei dem das Senden (1201) der Information über die Fernstörung der Basisstation durch das erste Gerät oder die CU des ersten Geräts an die der Identifikationsinformation entsprechende Opferbasisstation Folgendes umfasst:
Senden der Information über die Fernstörung der Basisstation durch das erste Gerät oder die CU des ersten Geräts an die der Identifikationsinformation entsprechende Opfer-Basisstation mit den Identifikationsinformation über die Opfer-Basisstation als Zieladresse; oder
Senden der Information über die Fernstörung der Basisstation durch das erste Gerät oder die CU des ersten Geräts an ein Kernnetzwerk, so dass das Kernnetzwerk die Information über die Fernstörung der Basisstation an die der Identifikationsinformation entsprechende Opfer-Basisstation sendet, wobei die Identifikationsinformation über die Opfer-Basisstation als Zieladresse dient.

12. Verarbeitungsverfahren nach Anspruch 8, bei dem das Senden (1201) der Information über die Fernstörung der Basisstation durch die CU des ersten Geräts an die betroffene Basisstation umfasst:
Empfangen der Information über die Fernstörung der Basisstation durch die CU des ersten Geräts von der DU des ersten Geräts; und
Senden der Information über die Fernstörung der Basisstation durch die CU des ersten Geräts an die Opfer-Basisstation;
oder
das Senden der Information über die Fernstörung der Basisstation durch die CU des ersten Geräts an die betroffene Basisstation umfasst:
Zusammenführen der Information über die Fernstörung der Basisstation von mehreren DUs des ersten Geräts durch die CU des ersten Geräts; und
Senden der zusammengeführten Information über die Fernstörung der Basisstation durch die CU des ersten Geräts an die Opfer-Basisstation.

13. Kommunikationsgerät (1300) mit einer verteilten Einheit (DU) (1301) und einer zentralisierten Einheit (CU) (1302), wobei
die DU (1301) oder die CU (1302) des Kommunikationsgeräts konfiguriert ist, um eine Basisstationssatz-ID und/oder eine Konfiguration einer RIM-RS- (Remote Interference Management-Reference Signal) -Ressource zu bestimmen, und das Kommunikationsgerät eine Angreifer-Basisstation oder eine Opfer-Basisstation ist;
wobei, wenn das Kommunikationsgerät die Opfer-Basisstation ist, die DU des Kommunikationsgeräts konfiguriert ist, um eine Fernstörung zu erkennen, und die DU des Kommunikationsgeräts ferner konfiguriert ist, um ein RIM-RS zu senden, wenn die DU des Kommunikationsgeräts die Fernstörung erkennt.

## Revendications

1. Procédé de traitement, comprenant l'étape prévoyant de :
déterminer (601), par un premier dispositif, un identifiant d'ensemble de stations de base, ID, et/ou une configuration d'une ressource de signal de référence de gestion d'interférence à distance, RIM-RS, dans lequel le premier dispositif est une station de base agresseuse ou une station de base victime, et le premier dispositif comprend : une unité distribuée, DU, et une unité centralisée, CU ;
dans lequel, lorsque le premier dispositif est la station de base victime, le procédé comprend en outre les étapes prévoyant de :
détecter (701), par l'intermédiaire de la DU du premier dispositif, une interférence à distance ; et
déterminer (702), par l'intermédiaire de la CU ou de la DU du dispositif, de transmettre un RIM-RS lorsque la DU du premier dispositif détecte l'interférence à distance ;
dans lequel la détermination, par la CU ou la DU du premier dispositif, de transmettre le RIM-RS lorsque la DU du premier dispositif détecte l'interférence à distance comprend l'étape prévoyant de :
transmettre, par l'intermédiaire de la DU du premier dispositif, le RIM-RS lorsque la DU du premier dispositif détecte l'interférence à distance.

2. Procédé de traitement selon la revendication 1, dans lequel la configuration de la ressource de RIM-RS est associée à l'ID d'ensemble de stations de base.

3. Procédé de traitement selon la revendication 1, dans lequel l'ID d'ensemble de stations de base et/ou la configuration de la ressource de RIM-RS sont prédéfinis par l'unité distribuée, DU, du premier dispositif ; ou l'ID d'ensemble de stations de base et/ou la configuration de la ressource de RIM-RS sont prédéfinis par la CU du premier dispositif.

4. Procédé de traitement selon la revendication 1, dans lequel la détermination (601), par l'intermédiaire du premier dispositif, de l'ID d'ensemble de stations de base et/ou de la configuration de la ressource de RIM-RS comprend les étapes prévoyant de :
recevoir, par l'intermédiaire de la DU du premier dispositif, l'ID d'ensemble de stations de base et/ou la configuration de la ressource de RIM-RS depuis l'autre dispositif ; ou
recevoir, par l'intermédiaire de la CU du premier dispositif, l'ID d'ensemble de stations de base et/ou la configuration de la ressource de RIM-RS ; et transmettre, par l'intermédiaire de la CU du premier dispositif, l'ID d'ensemble de stations de base et/ou la configuration de la ressource de RIM-RS à une ou plusieurs DU connectées à la CU ; ou
déterminer, par l'intermédiaire de la CU du premier dispositif, l'ID d'ensemble de stations de base et/ou la configuration de la ressource de RIM-RS conformément à des informations sur une interférence de station de base à distance lorsque l'interférence de station de base à distance se produit ;
dans lequel l'autre dispositif est une Operation d'Administration et Maintenance , OAM.

5. Procédé de traitement selon la revendication 3 ou 4, dans lequel un même ID d'ensemble de stations de base et une même ressource de RIM-RS, ou différents ID d'ensemble de stations de base et différentes ressources de RIM-RS, sont configurés pour différentes DU connectées à l'unité centralisée, CU, du premier dispositif.

6. Procédé de traitement selon la revendication 4, dans lequel la détermination, par l'intermédiaire de la CU du premier dispositif, l'ID d'ensemble de stations de base et/ou la configuration de la ressource de RIM-RS conformément à des informations sur l'interférence de station de base à distance lorsque l'interférence de station de base à distance se produit comprend les étapes prévoyant de ;
recevoir, par l'intermédiaire de la CU du premier dispositif, les informations sur l'interférence de station de base à distance depuis une DU du premier dispositif lorsque l'interférence de station de base à distance se produit ;
permettre, par l'intermédiaire de la CU du premier dispositif, à une ou plusieurs DU de former un ensemble conformément aux informations sur l'interférence de station de base à distance ; et
transmettre, par l'intermédiaire de la CU du premier dispositif, l'ID d'ensemble de stations de base correspondant à l'ensemble et/ou à la configuration de la ressource de RIM-RS à un ou plusieurs DU connectées à la CU.

7. Procédé de traitement selon la revendication 1, dans lequel la détermination, par l'intermédiaire de la CU ou de la DU du premier dispositif, de transmettre le RIM-RS lorsque la DU du premier dispositif détecte l'interférence à distance comprend les étapes prévoyant de :
transmettre, par l'intermédiaire de la DU du premier dispositif, des informations indiquant que la DU est soumise à l'interférence à distance à une CU du premier dispositif lorsque la DU du premier dispositif détecte l'interférence à distance ;
recevoir, par l'intermédiaire de la DU du premier dispositif, des premières informations provenant de la CU du premier dispositif, les premières informations étant utilisées pour indiquer que la DU du premier dispositif transmet le RIM-RS ; et
transmettre, par l'intermédiaire de la DU du premier dispositif, le RIM-RS conformément aux premières informations.

8. Procédé de traitement selon la revendication 1, dans lequel lorsque le premier dispositif est la station de base agresseuse, le procédé comprend en outre : la transmission (1201), par l'intermédiaire du premier dispositif ou de la CU du premier dispositif, des informations d'interférence de station de base à distance à la station de base victime.

9. Procédé de traitement selon la revendication 8, dans lequel les informations d'interférence de station de base à distance comprennent une ou plusieurs parmi :
des deuxièmes informations indiquant que le premier dispositif détecte un RIM-RS en provenance de la station de base victime ;
des troisièmes informations indiquant que l'interférence de station de base à distance disparaît, que le RIM-RS en provenance de la station de base victime disparaît ou que le premier dispositif ne parvient pas à détecter le RIM-RS en provenance de la station de base victime ;
des informations indiquant que le premier dispositif effectue un repli d'interférence ; et
des informations d'identification correspondant au premier dispositif.

10. Procédé de traitement selon la revendication 8, dans lequel la transmission (1201), par l'intermédiaire du premier dispositif ou de la CU du premier dispositif, des informations d'interférence de station de base à distance à la station de base victime comprend les étapes prévoyant de :
déterminer, par l'intermédiaire du premier dispositif ou de la CU du premier dispositif, des informations d'identification concernant la station de base victime ; et transmettre, par l'intermédiaire du premier dispositif ou de la CU du premier dispositif, les informations d'interférence de station de base à distance à la station de base victime correspondant aux informations d'identification ; ou
transmettre, par l'intermédiaire du premier dispositif ou de la CU du premier dispositif, les informations d'interférence de station de base à distance à la station de base victime via un élément de réseau ; ou
transmettre, par l'intermédiaire du premier dispositif ou de la CU du premier dispositif, les informations d'interférence de station de base à distance à la station de base victime via un réseau central.

11. Procédé de traitement selon la revendication 10, dans lequel la transmission (1201), par l'intermédiaire du premier dispositif ou de la CU du premier dispositif, des informations d'interférence de station de base à distance à la station de base victime correspondant aux informations d'identification comprend les étapes prévoyant de :
transmettre, par l'intermédiaire du premier dispositif ou de la CU du premier dispositif, les informations d'interférence de station de base à distance à la station de base victime correspondant aux informations d'identification, avec les informations d'identification concernant la station de base victime en tant qu'adresse cible ; ou
transmettre, par l'intermédiaire du premier dispositif ou de la CU du premier dispositif, les informations d'interférence de station de base à distance à un réseau central, de sorte que le réseau central transmette les informations d'interférence de station de base à distance à la station de base victime correspondant aux informations d'identification, avec les informations d'identification concernant la station de base victime en tant qu'adresse cible.

12. Procédé de traitement selon la revendication 8, dans lequel la transmission (1201), par l'intermédiaire de la CU du premier dispositif, des informations d'interférence de station de base à distance à la station de base victime comprend les étapes prévoyant de :
recevoir, par l'intermédiaire de la CU du premier dispositif, les informations d'interférence de station de base à distance en provenance de la DU du premier dispositif ; et
transmettre, par l'intermédiaire de la CU du premier dispositif, les informations d'interférence de station de base à distance à la station de base victime ; ou
la transmission, par l'intermédiaire de la CU du premier dispositif, des informations d'interférence de station de base à distance à la station de base victime comprend les étapes prévoyant de :
fusionner, par l'intermédiaire de la CU du premier dispositif, des informations d'interférence de station de base à distance en provenance d'une pluralité de DU du premier dispositif ; et
transmettre, par l'intermédiaire de la CU du premier dispositif, des informations d'interférence de station de base à distance fusionnées à la station de base victime.

13. Dispositif de communication (1300), comprenant : une unité distribuée, DU, (1301) et une unité centralisée, CU, (1302) ; dans lequel :
la DU (1301) ou la CU (1302) du dispositif de communication est configurée pour déterminer un ID d'ensemble de stations de base et/ou une configuration d'une ressource de signal de référence de gestion d'interférence à distance, RIM-RS, et le dispositif de communication est une station de base agresseuse ou une station de base victime ;
dans lequel lorsque le dispositif de communication est la station de base victime, la DU du dispositif de communication est configuré pour détecter une interférence à distance, et la DU du dispositif de communication est en outre configuré pour, lorsque la DU du dispositif de communication détecte l'interférence à distance, transmettre un RIM-RS.
